# EUROPÄISCHE PATENTSCHRIFT

(11) **EP 1 407 460 B1**
(45) Veröffentlichungstag und Bekanntmachung des Hinweises auf die Patenterteilung: **05.12.2007**
(21) Anmeldenummer: 02754366.9
(22) Anmeldetag: 15.07.2002
(51) Int. Cl.: H01C 7/12, H01T 1/14, H01T 1/16

(54) **ÜBERSPANNUNGSABLEITER**
OVERVOLTAGE ARRESTER
COUPE-CIRCUIT DE SURTENSION

(30) Priorität: 17.07.2001 DE 10134752
(43) Veröffentlichungstag der Anmeldung: 14.04.2004
(73) Patentinhaber: EPCOS AG, 81669 München (DE)
(72) Erfinder: BOBERT, Peter, 14612 Falkensee (DE); BOY, Jürgen, 13465 Berlin (DE); FUHRMANN, Klaus-Dieter, 13599 Berlin (DE)
(74) Vertreter: Epping - Hermann - Fischer
(86) Internationale Anmeldenummer: PCT/DE2002/002595
(87) Internationale Veröffentlichungsnummer: WO 2003/009312

(56) Entgegenhaltungen:
- DE-A- 19 928 322
- US-A- 5 388 023

## Beschreibung

Die Erfindung betrifft einen Überspannungsableiter mit einer Mittelelektrode und wenigstens einer Außenelektrode. Ein elektrisch leitender Federbügel ist an der Mittelelektrode befestigt und übt auf die Außenelektrode eine Federkraft aus.

Überspannungsableiter der eingangs genannten Art werden üblicherweise verwendet zum Absichern von Telekommunikationseinrichtungen gegenüber kurzzeitig auftretenden Überspannungen, wie sie beispielsweise aus Blitzeinschlägen resultieren. Dabei wird durch Zünden des Überspannungsableiters die Außenelektrode mittels eines Lichtbogens mit der Mittelelektrode kurzgeschlossen. Sobald das Auftreten der Überspannung beendet ist, erlischt der Lichtbogen und die Schaltstrecke zwischen Mittel- und Außenelektrode ist wieder isolierend.

Um die soeben beschriebene Schutzfunktion auch bei Ausfall eines Überspannungsableiters aufrecht zu erhalten, können Ableiter mit zusätzlichen Funktionen ausgestattet werden. In diesem Zusammenhang sind Mechanismen zum Absichern des Ableiters bei einer thermischen Überbelastung bekannt (englisch: Fail safe), bei denen zwischen dem Federbügel und der Außenelektrode ein Schmelzelement aus Lotmaterial oder auch einer isolierenden Folie angeordnet ist, das bei zu hoher Temperatur die Bewegung des Federbügels freigibt, der dann die Schaltstrecke des Ableiters zwischen Mittelelektrode und Außenelektrode überbrückt und damit kurzschließt.

Ein weiterer bei Ableitern auftretender Fehler kann die Undichtigkeit des Ableiters sein, die zur Folge hat, daß die Zündspannung des Ableiters stark ansteigt. Der Ableiter zündet dann bei der ursprünglichen Zündspannung nicht mehr und kann dadurch auch keine Wärme mehr erzeugen, die den Sicherungsmechanismus in Gang setzt. Um auch in dieser Situation die Schutzfunktion sicher zu stellen, können die Ableiter zusätzlich mit einer Sicherung bei Undichtigkeit ausgestattet werden (englisch: vent safe). Dabei ist jeder Funkenstrecke des Ableiters ein zusätzliches spannungsbegrenzendes Bauteil parallel geschaltet. Dies kann ein Varistor oder auch ein Halbleiter (z. B. Break-over-Diode) sein. Dadurch wird sichergestellt, daß auch bei einem defekten oder undichten Ableiter die Schutzfunktion erhalten bleibt, da in diesem Fall entweder das zusätzliche spannungsbegrenzende Bauteil selbst schützt, den Ableiter kurzschließt oder durch Erwärmung einen thermischen Kurzschlußmechanismus auslöst.

Die höchsten Anforderungen an die Fehlerschutz-Mechanismen entstehen bei undichtem Ableiter. So schreibt beispielsweise die amerikanische Spezifikation Telcordia 1361 einen Test vor, bei dem ein undichter 3-Elektrodenableiter an eine Wechselspannung von 1000 V gelegt wird, wobei ein maximaler Strom von 30 Ampere pro Schaltstrecke fließen kann. Bei einer Ableiter-Variante, die den Einsatz von Varistoren als spannungsbegrenzende Bauteile voraussieht, sind dabei Schaltleistungen von 30 kW pro Schaltstrecke zu bewältigen. Diese hohe elektrische Leistung führt zwangsläufig zu Funkenbildung und Abbrand durch Lichtbogen, die die Gefahr der Brandentstehung in sich birgt, da die Ableiter üblicherweise in Kunststoffgehäuse eingebaut werden.

Aus der Druckschrift US 5,388,023 sind Ableiter der eingangs genannten Art bekannt, bei denen zwischen dem Federbügel und der Außenelektrode ein Schmelzelement angeordnet ist. Im Normalbetriebsfall muß das Schmelzelement einen Kurzschluß verhindern und muß dem entsprechend mit einer Mindestdicke massiv ausgebildet sein. Im Fehlerfall gibt das Schmelzelement dabei den elektrischen Kontakt zwischen dem Federbügel und dem Varistor bzw. der Außenelektrode frei. Dieses Schmelzelement hat eine relativ große zu schmelzende Masse, wodurch der Übergang des Schmelzelements von der festen in die flüssige Phase lange dauert und dementsprechend das Auslösen der Schmelzsicherung verzögert wird. Dadurch steigt die Gefahr der Funkenbildung stark an. Als Abstandshalter kann es sich auch um einen Varistor handeln, der eine Auslösespannung aufweist, die zwischen 10 und 40% über der Zünspannung des Überspannungsabieiters liegt. Die Enden der Federbügel sind mit einer Kappe versehen, die von der Aussenelektrode beabstandet sind.

Ziel der vorliegenden Erfindung ist es daher, einen Überspannungsableiter anzugeben, der einen schnellen Auslösemechanismus im Fehlerfall vorsieht.

Dieses Ziel wird erfindungsgemäß durch einen Überspannungsableiter gemäß Patentanspruch 1 erreicht. Vorteilhafte Ausgestaltungen der Erfindung sind den abhängigen Patentansprüchen zu entnehmen.

Die Erfindung gibt einen Überspannungsableiter an, der eine Mittel- und wenigstens eine Außenelektrode aufweist. Ein elektrisch leitender Federbügel ist an der Mittelelektrode befestigt und übt auf die Außenelektrode eine Federkraft aus. Zwischen dem Federbügel und der Außenelektrode ist ein elektrisches Bauelement angeordnet, das bei Stromfluß Wärme erzeugt. Der Federbügel liegt an einem elektrisch leitenden Kontaktelement an, das mittels einer schmelzbaren Masse an einem Distanzelement befestigt und von der Außenelektrode beabstandet ist. Die schmelzbare Masse haftet sowohl am Kontaktelement als auch am Distanzelement. Bei geschmolzener Masse ist das Kontaktelement durch den Federbügel auf die Außenelektrode gedrückt.

Der erfindungsgemäße Überspannungsableiter hat den Vorteil, daß die im Normalbetriebsfall des Ableiters erforderliche Isolation zwischen dem Federbügel und der Außenelektrode durch Beabstandung des Kontaktelements von der Außenelektrode mittels des Distanzelements bewirkt wird. Die schmelzbare Masse ist lediglich erforderlich, um das Kontaktelement an dem Distanzelement zu befestigen und kann daher in einer geringen Menge vorgesehen sein, die lediglich sicherstellen muß, daß das Kontaktelement von dem Distanzelement festgehalten wird.

Das elektrische Bauelement isoliert bei der Zündspannung, die der Ableiter im Normalbetrieb hat.

In einer vorteilhaften Ausführungsform der Erfindung kann das elektrische Bauelement ein Varistor sein. Ein solcher Varistor hat bei üblichen im Normalbetrieb vorliegenden statischen Zündspannungen von ca. 350 V von Ableitern noch einen hohen Widerstand von ca. 0,5 MΩ, so daß er praktisch eine Isolation zwischen dem Federbügel und der Außenelektrode darstellt. Im Überspannungsfall verringert sich jedoch der Widerstand des Varistors, so daß für den Fall, daß die Zündspannung des Ableiters durch einen Defekt des Ableiters auf sehr hohe Werte ansteigt (> 1000 V), die Sicherungsfunktion durch den Varistor übernommen werden kann. Darüber hinaus ist ein Varistor ein elektrisches Bauelement, das bei Stromfluß Wärme erzeugt und daher selbst einen thermischen Schutzmechanismus auslösen kann.

Das Bauelement kann jedoch in einer anderen Ausführungsform der Erfindung ein Halbleiterbauelement sein.

In einer Ausführungsform des Überspannungsableiters sind der Federbügel und das Kontaktelement zwei verschiedene Bauteile, wobei der Federbügel an dem Kontaktelement anliegt und es so gegen eine Außenelektrode drückt.

In einer anderen Ausführungsform ist das Kontaktelement einstückig in den Federbügel integriert. Auch hier liegt der Federbügel an dem Kontaktelement an, da Kontaktelement und Federbügel direkt aneinandergrenzen.

In einer Ausführungsform der Erfindung weist das Distanzelement die Form eines Bolzens auf. Das Kontaktelement weist eine Scheibe auf, die mit einem Loch versehen ist, in das das Distanzelement hineinragt.

Diese Ausführungsform der Erfindung hat den Vorteil, daß sie besonders leicht mit einfachen Mitteln herzustellen ist. Die Befestigung des Kontaktelements an dem Distanzelement kann bei entsprechender Dimensionierung des Bolzens bzw. des Lochs mit einer sehr geringen Menge von schmelzbarer Masse hergestellt werden, wodurch sich der Vorteil eines schnellen Auslösemechanismus ergibt.

In einer weiteren Ausführungsform der Erfindung weist der Federbügel ebenfalls ein Loch auf, durch das bei geschmolzener Masse das Distanzelement ragt. Dadurch wird sichergestellt, daß eine Behinderung des Auslösemechanismus durch einen mechanischen Kontakt zwischen dem Federbügel und dem Distanzelement vermieden wird. Je nach Ausführung des Distanzelements kann das Distanzelement auch schon bei noch nicht geschmolzener Masse durch das Loch im Federbügel ragen.

In einer weiteren Ausführungsform der Erfindung weist das Distanzelement in einem zwischen dem Kontaktelement und der Außenelektrode liegenden Abschnitt eine Verjüngung auf. Diese Verjüngung hat den Vorteil, daß bei Schmelzen der Masse die Bewegung des Kontaktelements entlang des bolzenförmigen Distanzelements nicht durch zu geringe Abstände zwischen dem Innenrand des Lochs des Kontaktelements und dem Distanzelement behindert wird, was die Ausgestaltung eines sehr schnellen Schutzmechanismus fördert. Durch das Loch in dem Kontaktelement, durch das das Distanzelement ragt, kann das Distanzelement zudem vorteilhaft zur Führung, Fixierung und Ausrichtung des Kontaktelements benutzt werden.

In einer weiteren vorteilhaften Ausführungsform der Erfindung ist das elektrische Bauelement zwischen der Außenelektrode und dem Distanzelement angeordnet. Dadurch kann bei Überlastung des Bauelements verhindert werden, daß ein im elektrischen Bauelement entstehender Lichtbogen nach außen dringen kann.

Die schmelzbare Masse kann in einer vorteilhaften Ausführungsform der Erfindung als Lot ausgebildet sein. In Verbindung mit lötbaren Materialien für das Kontaktelement und das Distanzelement ist so eine sehr einfache Verbindung zwischen Kontaktelement und Distanzelement möglich. Zudem stellen die für Lot verwendeten Zinn-Legierungen sicher, daß die Verbindung zwischen dem Kontaktelement und dem Distanzelement bei ausreichender Wärme schnell gelöst wird.

In einer weiteren Ausführungsform der Erfindung weist das Kontaktelement eine Scheibe auf, die am Scheibenrand mit einem sich in Richtung auf die Außenelektrode erstreckenden Kragen versehen ist. Ein solcher Kragen, innerhalb dessen besonders vorteilhaft das elektrische Bauelement angeordnet ist, kann zusätzlich das Überschlagen von Funken von dem elektrischen Bauelement zu leitenden Gegenständen außerhalb des elektrischen Bauelements wirksam vermindern. Dadurch wird auch die Brandgefahr verringert. Eine solche Scheibe mit Kragen kann besonders vorteilhaft in Form einer Kappe ausgeführt sein.

Mit Hilfe des Kragens kann auch der Kontaktraum zwischen dem Varistor und dem elektrisch leitenden Distanzelement abgedeckt werden. Dieser Kontaktraum ist so lange erforderlich, so lange das elektrische Bauelement die spannungsbegrenzende Funktion übernimmt. Die üblicherweise als elektrisches Bauelement verwendeten Varistoren können jedoch nicht dieselben elektrischen Leistungen bzw. dieselben hohen Ströme wie der Überspannungsableiter bewältigen. Bei länger anhaltenden Überspannungen oder bei sehr hohen Überspannungen wird der Varistor sehr schnell durch einen Durchschlag zerstört, wodurch die den Sicherungsmechanismus auslösende Wärme entsteht. Der Varistor stellt also maximal einen kurzfristigen Schutz bei kleineren Überspannungen bzw. Überströmen zur Verfügung.

In einer weiteren Ausführungsform der Erfindung kann eine Außenfläche des elektrischen Bauelements mit einem Schrumpfschlauch bedeckt sein. Dadurch werden Gleitentladungen und mithin die Bildung von Funken an der Außenseite des elektrischen Bauelements vermindert.

Auch auf der Außenfläche des Kragens kann ein Schrumpfschlauch angeordnet sein, der den zwischen dem elektrischen Bauelement und dem Distanzelement gebildeten Kontaktraum zusätzlich abdeckt.

Zudem wird durch einen solchen Schrumpfschlauch die Zufuhr von Sauerstoff zum Kontaktelement und mithin die Gefahr von Funkenbildung vermindert. Ferner wird die Gefahr eines seitlichen Kurzschlusses zwischen dem Kontaktelement und der Außenelektrode wirksam vermindert.

Ein Schrumpfschlauch an der Außenfläche des Kragens gewinnt zudem an Bedeutung, wenn nach einer anderen Ausführungsform der Erfindung die Außenelektrode am Rand einen Ring aufweist, der aus einer Eisen-Nickel-Legierung besteht. Durch diesen Ring ragt die Außenelektrode sehr weit in Richtung des Kontaktelements, wodurch die Gefahr eines seitlichen Kurzschlusses steigt und mithin die Anordnung eines Schrumpfschlauchs an einer Außenfläche des Kragens besonders vorteilhaft ist.

Der Ring am äußeren Rand der Außenelektrode hat den Vorteil, daß die bei dem Auflöten der Außenelektrode auf den üblicherweise als Bauelementkörper verwendeten Keramikröhrchen störenden unterschiedlichen thermischen Ausdehnungskoeffizienten durch Belegen der dem Keramikröhrchen gegenüberliegenden Seite der Außenelektrode mit einem dem Keramikröhrchen ähnlichen Material ausgeglichen werden können.

Im folgenden wird die Erfindung anhand von Ausführungsbeispielen und den dazugehörigen Figuren näher erläutert.

Figur 1 zeigt beispielhaft einen erfindungsgemäßen Überspannungsableiter in einem Zustand, bei dem der Sicherungsmechanismus nicht ausgelöst ist, teilweise in Draufsicht, teilweise in einem schematischen Querschnitt.

Figur 2 zeigt den Überspannungsableiter aus Figur 1 in einem Zustand, bei dem der Sicherungsmechanismus ausgelöst ist.

Figur 3 zeigt beispielhaft einen weiteren erfindungsgemäßen Überspannungsableiter in einem Zustand, bei dem der Sicherungsmechanismus nicht ausgelöst ist, teilweise in Draufsicht und teilweise in einem schematischen Querschnitt.

Figur 4 zeigt den Überspannungsableiter aus Figur 3 in einem Zustand, bei dem der Kurzschlußmechanismus ausgelöst ist.

Figur 5 zeigt eine weitere Ausführungsform eines Überspannungsableiters in einem schematischen Längsschnitt.

Figur 6 zeigt eine weitere Ausführungsform eines Überspannungsableiters in einem schematischen Längsschnitt.

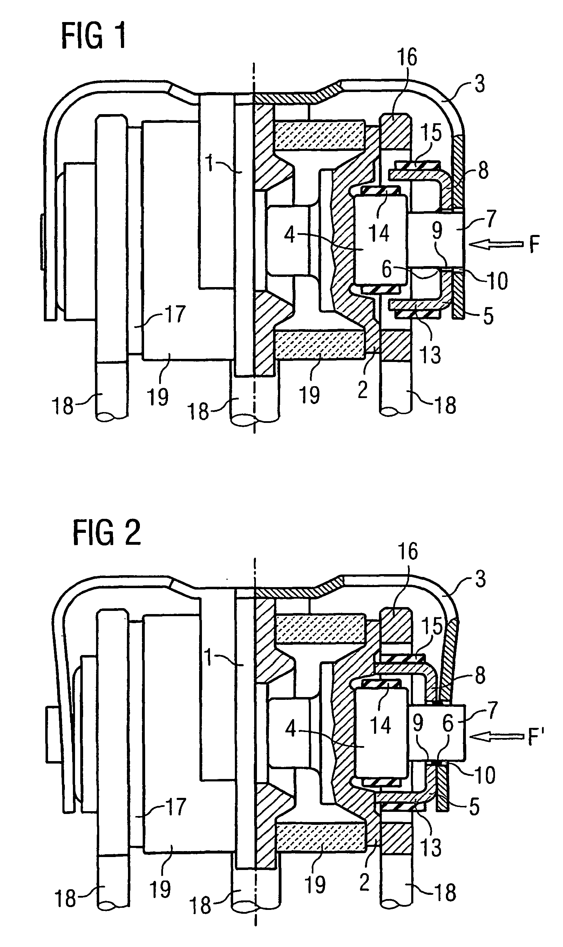

Figur 1 zeigt einen Überspannungsableiter mit einem Keramikkörper 19, an dessen äußeren Enden Außenelektroden 2, 17 angeordnet sind. Zwischen zwei Keramikkörpern 19 ist zudem eine Mittelelektrode 1 angeordnet. Die Mittel- bzw. Außenelektroden 1, 2, 17 sind durch Löten mit den Keramikkörpern 19 verbunden. Um die Unterschiede in den thermischen Ausdehnungskoeffizienten von Keramikkörpern 19 und Außenelektroden 2, 17, die üblicherweise aus Kupfer bestehen, auszugleichen, ist an den Außenseiten der Außenelektroden 2, 17 jeweils ein Ring 16 angeordnet, der aus einer Eisen-Nickel-Legierung besteht. Dieser Ring hat neben der Anpassung der Ausdehnungskoeffizienten beim Auflöten der Außenelektroden 2, 17 auf die Keramikkörper 19 zudem den Vorteil, daß er abbrandfester als das für die Außenelektroden 2, 17 verwendete Kupfer ist.

An der Mittelelektrode 1 ist ein;Federbügel 3 befestigt, der auf die Stirnseite der Außenelektrode 2 übergreift und auf diese Außenelektrode 2 eine Federkraft F ausübt. Der Federbügel 3 wird durch ein Kontaktelement 5 gehalten, das an einem Distanzelement 7 befestigt ist. Das Distanzelement 7 hat die Form eines runden Bolzens, der durch ein rundes Loch 9 im Kontaktelement 5 ragt. Die mechanische Verbindung zwischen dem Distanzelement 7 und dem Kontaktelement 5 ist durch eine schmelzbare Masse entlang des Lochrandes des Kontaktelements 5 hergestellt. Die schmelzbare Masse 6 wird vorteilhafterweise als Lot gewählt. Das Distanzelement 7 wird von dem Federbügel 3 auf ein elektrisches Bauelement 4 gedrückt, welches ein Varistor ist. An der Außenseite des elektrischen Bauelements 4 ist ein Schrumpfschlauch 14 angeordnet. Das Kontaktelement 5 ist als Kappe ausgebildet, die einen Boden im Form einer Scheibe 8 und einen am Rand der Scheibe 8 angeordneten Kragen 13 aufweist. Insbesondere kann die Kappe einstückig ausgebildet sein. An der Außenseite des Kragens 13 ist ein Schrumpfschlauch 15 angeordnet. Der Federbügel 3 weist ebenfalls ein Loch 10 auf, durch das das Distanzelement 7 ragt. Der Federbügel 3 wird durch das am Distanzelement 7 befestigte Kontaktelement 5 gehalten. Dies ist so lange der Fall, so lange die schmelzbare Masse hart ist und den mechanischen Kontakt zwischen dem Kontaktelement 5 und dem Distanzelement 7 vermittelt. Der Federbügel 3, das Kontaktelement 5 und das Distanzelement 7 sind so gestaltet, daß bei Flüssigwerden der schmelzbaren Masse 6 der Federbügel 3 und das Kontaktelement 5 entlang des Distanzelements 7 gleiten können.

Die Schrumpfschläuche 14, 15 bestehen aus elektrisch isolierendem Material. Das elektrische Bauelement 4 ist innerhalb eines Raumes angeordnet, der durch den Kragen 13 und den Ring 16 nach außen hin abgedeckt wird. Dadurch wird die Gefahr von Funkenüberschlägen vermindert.

Der Federbügel 3 kann beispielsweise aus Federstahl gefertigt sein. Das Kontaktelement 5 und das Distanzelement 7 werden in vorteilhafter Weise aus Stahlblech gefertigt. Zur Kontaktierung des Überspannungsableiter sind Anschlußdrähte 18 vorgesehen, die mit der Mittelelektrode 1 und den Außenelektroden 2, 17 elektrisch leitend verbunden sind.

Figur 2 zeigt einen Überspannungsableiter gemäß Figur 1, wobei entsprechende Elemente durch entsprechende Bezugszeichen bezeichnet sind. In dem in Figur 2 gezeigten Zustand des Überspannungsableiters ist der Schutzmechanismus ausgelöst worden. Durch das Schmelzen der schmelzbaren Masse 6 ist das Kontaktelement 5 von dem Federbügel 3 in Richtung auf die Außenelektrode 2 gedrückt worden. Durch entsprechende Gestaltung der Abmessungen der am Schutzmechanismus beteiligten Elemente kann erreicht werden, daß der Federbügel 3 das Kontaktelement 5 so weit in Richtung auf die Außenelektrode 2 verschiebt, daß das Kontaktelement 5 unter Aufbringung eines Kontaktdrucks, der wiederum vom Federbügel 3 (Restfederkraft F') herrührt, auf die Außenelektrode 2 drückt, wodurch die elektrische Kontaktierung der Außenelektrode 2 mit dem Federbügel 3 und mithin mit der Mittelelektrode 1 und somit das Auslösen des Kurzschlußmechanismus erreicht wird.

Sobald der Kurzschlußmechanismus zwischen der Mittelelektrode 1 und der Außenelektrode 2 ausgelöst ist, fließt durch das elektrische Bauelement 4 kein Strom mehr und mithin wird auch keine Wärme mehr erzeugt. Deshalb ist in Figur 2 die schmelzbare Masse 6 wieder in festem Zustand gezeigt.

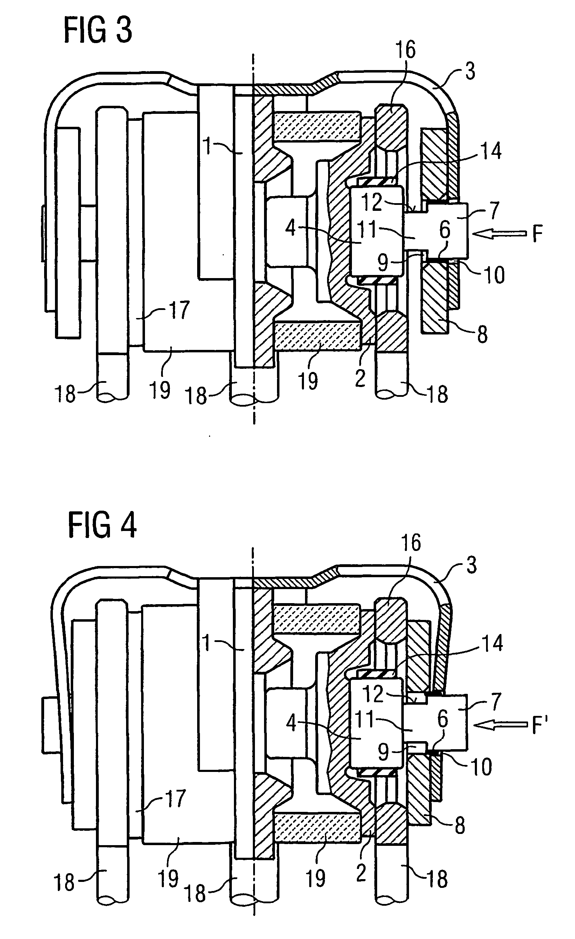

Figur 3 zeigt einen Überspannungsableiter, der ähnlich dem in Figur 1 gezeigten Überspännungsableiter ist. Entsprechende Elemente sind durch gleiche Bezugszeichen bezeichnet. Im Unterschied zu Figur 1 hat der Überspannungsableiter gemäß Figur 3 ein Kontaktelement 5, das die Form einer Scheibe 8 aufweist. Eine solche Scheibe 8 ist leichter zu fertigen als die in Figur 1 gezeigte Kappe, wodurch der in Figur 3 gezeigte Überspannungsableiter besonders kostengünstig herstellbar ist. Die Abdeckung des elektrischen Bauelements 4 ist jedoch weniger stark ausgeprägt als in Figur 1. Das Kontaktelement 5 ist mittels der schmelzbaren Masse 6 an dem Distanzelement 7 befestigt. Das Distanzelement 7 weist die Form eines runden Bolzens auf, der jedoch im Unterschied zu Figur 1 in einem Abschnitt 11, der zwischen dem Kontaktelement 5 und der Außenelektrode 2 liegt, eine Verjüngung 12 aufweist. Diese Verjüngung 12 gestattet eine besonders leichte Bewegung des Kontaktelements 5 bei Auslösen des Sicherungsmechanismus in Richtung auf die Außenelektrode 2, da der Freiraum zwischen dem Distanzelement 7 und dem Innenrand des Lochs 9 des Kontaktelements 5 vergrößert ist. Dadurch wird die Schnelligkeit des Auslösemechanismus weiter verbessert.

Figur 4 zeigt den Überspannungsableiter aus Figur 3 in einem Zustand, in dem der Sicherungsmechanismus ausgelöst hat. Der Federbügel 3 weist eine Restfederkraft F' auf, die das Kontaktelement 5 auf den Ring 16 drückt und somit einen elektrischen Kontakt zwischen der Mittelelektrode 1 und der Außenelektrode 2 herstellt. Der Ring 16 ist elektrisch leitend, ebenso wie das Kontaktelement 5 und der Federbügel 3. Um einen wirksamen und schnellen Auslösemechanismus bereitzustellen, ist es vorteilhaft, wenn der Federbügel 3 so gestaltet ist, daß er mit einer Kraft F von ca. 30 bis 40 Newton auf die Außenelektrode 2 drückt. Die spezielle Anordnung des Distanzelements 7, das gegen das elektrische Bauelement 4 gedrückt wird, kann insbesondere dem Abblocken von im elektrischen Bauelement 4 entstehenden Lichtbögen dienen.

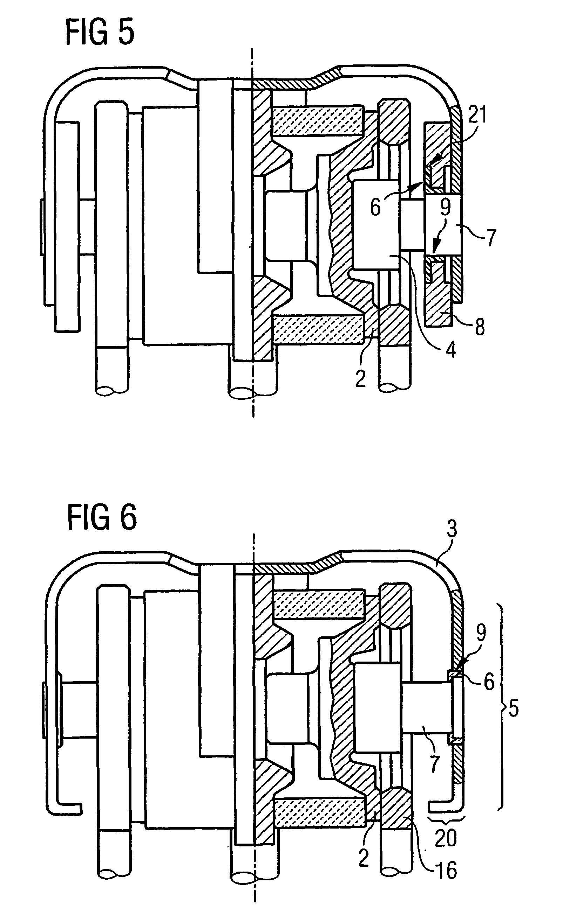

Figur 5 zeigt einen Überspannungsableiter, der ähnlich dem in Figur 4 gezeigten Überspannüngsableiter ist. Im Unterschied zu Figur 4 weist der Überspannungsableiter aus Figur 5 keinen Schrumpfschlauch 14 über dem elektrischen Bauelement 4 auf. Darüber hinaus ist die Scheibe 8 mit einem Loch 9 versehen, welches in Richtung auf die Außenelektrode 2 eine Erweiterung 21 aufweist. Das Loch 9 hat über seine gesamte Länge Berührung mit der schmelzbaren Masse 6. Die Erweiterung 21 ist mit schmelzbarer Masse 6 gefüllt. Die Erweiterung 21 bietet den Vorteil, daß beim Schmelzen der schmelzbaren Masse 6 ein schnelles Verfahren der Scheibe 8 entlang des Distanzelementes 7 erfolgen kann, ohne daß die Gefahr einer Verhakung zwischen Distanzelement 7 und Scheibe 8 im vorderen Teil der Scheibe 8 besteht, was das Auslösen des Sicherungsmechanismus verzögern würde.

Figur 6 zeigt einen Überspannungsableiter in einem schematischen Längsschnitt, wo das Kontaktelement 5 als Teil des Federbügels 3 ausgebildet ist. Das Kontaktelement 5 weist insbesondere an seinem unteren Ende einen nach innen gebogenen Abschnitt 20 auf, der im Falle von geschmolzener schmelzbarer Masse 6 durch den Federdruck des Federbügels 3 den Ring 16 und mithin die Außenelektrode 2 kontaktiert. Gemäß Figur 6 weist das Kontaktelement 5 einen Abschnitt auf, der mit einem Loch 9 versehen ist. Im Innern des Lochs 9 ist das Kontaktelement 5 mit dem Distanzelement 7 mittels einer schmelzbaren Masse 6 verbunden.

Der beschriebene Sicherungsmechanismus ist selbstverständlich nicht auf die Absicherung nur einer Schaltstrecke zwischen der Mittelelektrode 1 und der Außenelektrode 2 beschränkt. Durch symmetrische Ergänzung kann, wie auch in den Figuren 1 bis 4 dargestellt, die zweite Schaltstrecke zwischen der Mittelelektrode 1 und der weiteren Außenelektrode 17 in entsprechender Art und Weise abgesichert werden.

## Patentansprüche

1. Überspannungsableiter mit einer Mittelelektrode und wenigstens einer Außenelektrode,
- bei dem ein elektrisch leitender Federbügel (3) an der Mittelelektrode (1) befestigt ist und eine Federkraft (F) auf die Außenelektrode (2) ausübt,
- bei dem zwischen dem Federbügel (3) und der Außenelektrode (2) ein elektrisches Bauelement (4) angeordnet ist, das bei der Zündspannung des Überspannungsableiters nicht leitend ist und das bei Stromfluß Wärme erzeugt,
- bei dem der Federbügel (3) an einem elektrisch leitenden Kontaktelement (5) anliegt, das von der Außenelektrode (2) beabstandet ist,
**dadurch gekennzeichnet, dass**
das Kontaktelement (5) mittels einer schmelzbaren Masse (6) an einem Distanzelement (7) befestigt ist und bei dem bei geschmolzener Masse (6) das Kontaktelement (5) durch den Federbügel (3) auf die Außenelektrode (2) gedrückt ist.

2. Überspannungsableiter nach Anspruch 1,
bei dem das Kontaktelement (5) einstückig in den Federbügel (3) integriert ist.

3. Überspannungsableiter nach Anspruch 1,
bei dem das Distanzelement (7) die Form eines Bolzens aufweist und bei dem das Kontaktelement (5) eine Scheibe (8) aufweist, die mit einem Loch (9) versehen ist, in das das Distanzelement (7) hineinragt.

4. Überspannungsableiter nach Anspruch 3,
bei dem der Federbügel (3) ein Loch (10) aufweist, durch das bei geschmolzener Masse (6) das Distanzelement (7) ragt.

5. Überspannungsableiter nach einem der Ansprüche 3 und 4,
bei dem das Distanzelement (7) an einem zwischen der Außenelektrode (2) und dem Kontaktelement (5) liegenden Abschnitt (11) eine Verjüngung (12) aufweist.

6. Überspannungsableiter nach einem der Ansprüche 3 bis 5,
bei dem das elektrische Bauelement (4) zwischen der Außenelektrode (2) und dem Distanzelement (7) angeordnet ist.

7. Überspannungsableiter nach einem der Ansprüche 1 bis 6,
bei dem die schmelzbare Masse (6) Lot ist.

8. Überspannungsableiter nach einem der Ansprüche 3 bis 7,
bei dem das Kontaktelement (5) eine Scheibe (8) aufweist, die mit einem sich in Richtung auf die Außenelektrode (2) erstreckenden Kragen (13) versehen ist.

9. Überspannungsableiter nach einem der Ansprüche 1 bis 8,
bei dem eine Außenfläche des elektrischen Bauelements (4) mit einem Schrumpfschlauch (14) bedeckt ist.

10. Überspannungsableiter nach einem der Ansprüche 8 oder 9,
bei dem eine Außenfläche des Kragens (13) mit einem Schrumpfschlauch (15) bedeckt ist.

11. Überspannungsableiter nach einem der Ansprüche 1 bis 10,
bei dem die Außenelektrode (2) am Rand einen Ring (16) aufweist, der aus einer Eisen-Nickel-Legierung besteht.

12. Überspannungsableiter nach einem der Ansprüche 1 bis 11,
bei dem der Federbügel (3) aus einem Federstahl gefertigt ist.

13. Überspannungsableiter nach einem der Ansprüche 1 bis 12,
bei dem das Bauelement (4) ein Varistor oder ein Halbleiterbauelement ist.

14. Überspannungsableiter nach Anspruch 2,
bei dem das Kontaktelement (5) an seinem Ende einen nach innen gebogenen Abschnitt (20) aufweist.

15. Überspannungsableiter nach Anspruch 3,
bei dem das Loch (9) in der Scheibe (8) in Richtung auf die Außenelektrode (2) eine Erweiterung (21) aufweist.

## Claims

1. Surge arrester having a centre electrode and at least one outer electrode,
- in which an electrically conductive spring clip (3) is attached to the centre electrode (1) and exerts a spring force (F) on the outer electrode (2),
- in which an electrical component (4) is arranged between the spring clip (3) and the outer electrode (2), becomes non-conductive at the operating voltage of the surge arrester, and produces heat when current flows,
- in which the spring clip (3) rests on an electrically conductive contact element (5) which is at a distance from the outer electrode (2) which is **characterized in that** the contact element (5) is attached by means of a fusible mass (6) to a spacing element (7), in which, when the mass (6) is molten, the contact element (5) is pressed by the spring clip (3) against the outer electrode (2).

2. Surge arrester according to Claim 1,
in which the contact element (5) is integrally integrated in the spring clip (3).

3. Surge arrester according to Claim 1,
in which the spacing element (7) is in the form of a bolt, and in which the contact element (5) has a disk (8) which is provided with a hole (9) into which the spacing element (7) projects.

4. Surge arrester according to Claim 3,
in which the spring clip (3) has a hole (10) through which the spacing element (7) projects when the mass (6) is molten.

5. Surge arrester as claimed in one of Claims 3 and 4,
in which the spacing element (7) has a constriction (12) on a section (11) which is located between the outer electrode (2) and the contact element (5).

6. Surge arrester according to one of Claims 3 to 5,
in which the electrical component (4) is arranged between the outer electrode (2) and the spacing element (7).

7. Surge arrester according to one of Claims 1 to 6,
in which the fusible mass (6) is solder.

8. Surge arrester according to one of Claims 3 to 7,
in which the contact element (5) has a disk (8) which is provided with a collar (13) which extends in the direction of the outer electrode (2).

9. Surge arrester according to one of Claims 1 to 8,
in which one outer surface of the electrical component (4) is covered with a shrink sleeve (14).

10. Surge arrester according to one of Claims 8 or 9,
in which one outer surface of the collar (13) is covered by a shrink sleeve (15).

11. Surge arrester according to one of Claims 1 to 10,
in which the outer electrode (2) has a ring (16), which is composed of an iron/nickel alloy, at the edge.

12. Surge arrester according to one of Claims 1 to 11,
in which the spring clip (3) is manufactured from a spring steel.

13. Surge arrester as claimed in one of Claims 1 to 12, in which the component (4) is a varistor or a semiconductor component.

14. Surge arrester as claimed in Claim 2,
in which the contact element (5) has at its end a section (20) which is bent inwards.

15. Surge arrester as claimed in Claim 3,
in which the hole (9) in the disk (8) has a widened area (21) in the direction of the outer electrode (2).

## Revendications

1. Coupe-circuit de surtension comprenant une électrode médiane et au moins une électrode extérieure,
- dans lequel un étrier de ressort (3) électriquement conducteur est fixé à l'électrode médiane (1) et exerce une force de ressort (F) sur l'électrode extérieure (2),
- dans lequel un composant électrique (4), qui n'est pas conducteur pour la tension d'amorçage du coupe-circuit de surtension et qui produit de la chaleur en présence d'un flux de courant est placé entre l'étrier de ressort (3) et l'électrode extérieure (2), et
- dans lequel l'étrier de ressort (3) est relié à un élément de contact (5) conducteur électrique qui est à une certaine distance de l'électrode extérieure (2),
**caractérisé par le fait que**
l'élément de contact (5) est fixé au moyen d'une masse fusible (6) à un élément d'écartement (7) et que, lorsque la masse (6) est fondue, l'élément de contact (5) est poussé par l'étrier de ressort (3) sur l'électrode extérieure (2).

2. Coupe-circuit de surtension selon la revendication 1,
dans lequel l'élément de contact (5) est intégré d'un seul tenant dans l'étrier de ressort (3).

3. Coupe-circuit de surtension selon la revendication 1,
dans lequel l'élément d'écartement (7) a la forme d'un axe et dans lequel l'élément de contact (5) comporte un disque (8) qui est muni d'un trou (9) dans lequel pénètre l'élément d'écartement (7).

4. Coupe-circuit de surtension selon la revendication 3,
dans lequel l'étrier de ressort (3) comporte un trou (10) dans lequel passe l'élément d'écartement (7) lorsque la masse (6) est fondue.

5. Coupe-circuit de surtension selon l'une des revendications 3 et 4,
dans lequel l'élément d'écartement (7) comporte un rétrécissement (12) sur un tronçon (11) situé entre l'électrode extérieure (2) et l'élément de contact (5).

6. Coupe-circuit de surtension selon l'une des revendications 3 à 5,
dans lequel le composant électrique (4) est placé entre l'électrode extérieure (2) et l'élément d'écartement (7).

7. Coupe-circuit de surtension selon l'une des revendications 1 à 6,
dans lequel la masse fusible (6) est un matériau à braser.

8. Coupe-circuit de surtension selon l'une des revendications 3 à 7,
dans lequel l'élément de contact (5) comporte un disque (8) qui est muni d'un collet (13) s'étendant en direction de l'électrode extérieure (2).

9. Coupe-circuit de surtension selon l'une des revendications 1 à 8,
dans lequel une surface extérieure du composant électrique (4) est recouverte par une gaine rétractable (14).

10. Coupe-circuit de surtension selon l'une des revendications 8 ou 9,
dans lequel une surface extérieure du collet (13) est recouverte par une gaine rétractable (15).

11. Coupe-circuit de surtension selon l'une des revendications 1 à 10,
dans lequel l'électrode extérieure (2) comporte au bord un anneau (16) qui est en un alliage de fer et de nickel.

12. Coupe-circuit de surtension selon l'une des revendications 1 à 11,
dans lequel l'étrier de ressort (3) est fabriqué en acier à ressort.

13. Coupe-circuit de surtension selon l'une des revendications 1 à 12,
dans lequel le composant (4) est un varistor ou un composant semi-conducteur.

14. Coupe-circuit de surtension selon la revendication 2,
dans lequel l'élément de contact (5) comporte à son extrémité un tronçon (20) courbé vers l'intérieur.

15. Coupe-circuit de surtension selon la revendication 3,
dans lequel le trou (9) dans le disque (8) comporte une extension (21) en direction de l'électrode extérieure (2).
